# EUROPÄISCHE PATENTSCHRIFT

(11) **EP 3 843 941 B1**
(45) Veröffentlichungstag und Bekanntmachung des Hinweises auf die Patenterteilung: **03.05.2023**
(21) Anmeldenummer: 19753354.0
(22) Anmeldetag: 13.08.2019
(51) Int. Cl.: B23Q 11/00, B25F 5/00

(54) **STAUBABSAUGVORRICHTUNG**
DUST SUCTION DEVICE
DISPOSITIF D'ASPIRATION DE POUSSIÈRE

(30) Priorität: 29.08.2018 DE 102018214614
(43) Veröffentlichungstag der Anmeldung: 07.07.2021
(73) Patentinhaber: Robert Bosch GmbH, 70442 Stuttgart (DE)
(72) Erfinder: GOEHRING, Daniel, 8280 Kreuzlingen (DE); DIETEL, Juergen, 70597 Stuttgart (DE)
(86) Internationale Anmeldenummer: PCT/EP2019/071681
(87) Internationale Veröffentlichungsnummer: WO 2020/043478

(56) Entgegenhaltungen:
- EP-A1- 2 312 194
- EP-A1- 2 639 010
- DE-A1-102011 079 294
- US-A1- 2009 317 200
- US-B2- 9 304 223

## Beschreibung

### Stand der Technik

In der DE 10 2013 102 726 A1 ist ein Staubsauger mit einem Saugvorsatz beschrieben, wobei der Saugvorsatz einen Saugmund mit einer Durchgriffsöffnung für einen Bohrer und einen von dem Saugmund gesonderten Ansaugbereich zur Saugbefestigung an einer Wandfläche aufweist. Der Saugmund ist von einem von dem Staubsauger erzeugten Unterdruck abkoppelbar.

Die US 9,304,223 B2 zeigt eine Vorrichtung gemäß dem Oberbegriff des Anspruchs 1, zum Detektieren von hinter Verkleidungen oder Wänden verborgenen Balken oder dergleichen, um an den detektierten Positionen Bohrlöcher erzeugen zu können. Die Vorrichtung weist ein Gehäuse auf, in dem eine Pumpe angeordnet ist, die einerseits über eine Ansaugöffnung einen Unterdruck in einem Haftbereich zum Halten der Vorrichtung an der detektierten Position und andererseits über eine Absaugöffnung einen Luftvolumenstrom zur Absaugung von Bohrklein aus dem Bohrloch erzeugt.

Aus der DE 10 2011 079 294 A1 geht eine Staubabsaugvorrichtung für eine ackubetriebene Handwerkzeugmaschine hervor, die ein Gehäuse mit einer Gehäuseschnittstelle zum lösbaren Verbinden mit einem Gehäuse der Handwerkzeugmaschine und eine Akkuschnittstelle zum Andocken eines Akkupacks aufweist. In dem Gehäuse ist zudem eine Gebläseeinheit zur Erzeugung eines Luftvolumenstroms und eine Absaugöffnung zur Absaugung von Bohrklein aus einem Bohrloch eines Werkstücks vorgesehen.

Es ist Aufgabe der Erfindung, eine sich selbst an einem Werkstück ansaugende Staubabsaugvorrichtung bereitzustellen, die gegenüber dem Stand der Technik sowohl in Kombination mit einer Handwerkzeugmaschine als auch unabhängig davon betrieben werden kann.

### Offenbarung der Erfindung

Zur Lösung der Aufgabe weist die Staubabsaugvorrichtung eine Akkuschnittstelle zur Verbindung der Staubabsaugvorrichtung mit einem Akkupack, insbesondere mit einem Handwerkzeugmaschinenakkupack, und zumindest eine Ansaugöffnung zur Erzeugung eines Unterdrucks in einem Haftbereich zwischen der Staubabsaugvorrichtung und einem Werkstück anhand eines von einer in einem Gehäuse der Staubabsaugvorrichtung aufgenommenen Gebläseeinheit erzeugten Luftvolumenstroms auf. Vorteilhaft kann dadurch eine effiziente Staubsaugvorrichtung mit einer besonders komfortablen Handhabung realisiert werden, wobei eine Energieversorgung der Staubabsaugvorrichtung mit Wechselakkupacks ermöglicht wird. Die Akkuschnittstelle weist eine mechanische Schnittstelle zur mechanischen Kopplung mit dem Akkupack auf. Die mechanische Schnittstelle ist insbesondere zur kraft- und/oder formschlüssigen Verbindung ausgebildet. Die Akkuschnittstelle weist zudem eine elektrische Schnittstelle zur elektrischen Verbindung mit dem Akkupack auf. Die elektrische Schnittstelle umfasst vorzugsweise zumindest zwei elektrische Kontaktelemente zur Übertragung von Energie. Des Weiteren kann die elektrische Schnittstelle einen oder mehrere Zusatzkontakte aufweisen, beispielsweise ein Kodierkontakt oder ein Zusatzkontakt zur Übertragung einer Temperaturinformation des Akkupacks und/oder der Staubabsaugvorrichtung.

Die Staubabsaugvorrichtung ist insbesondere als eine selbsthaltende bzw. als eine selbstansaugende Staubabsaugvorrichtung ausgebildet. Unter einer selbsthaltenden Staubabsaugvorrichtung soll in diesem Zusammenhang eine Staubabsaugvorrichtung verstanden werden, die während des Betriebs bzw. des Bearbeitungsvorgangs vollständig am Werkstück befestigbar ist. Insbesondere ist die Staubabsaugvorrichtung derart ausgebildet, dass im Betrieb die in dem Gehäuse aufgenommene Gebläseeinheit am Werkstück befestigbar ist. Insbesondere ist zum Betrieb der Staubabsaugvorrichtung bzw. zur Befestigung der Staubabsaugvorrichtung keine Verbindung mit einem externen Staubsauger, beispielsweise über einen Saugschlauch, notwendig.

Unter einer Handwerkzeugmaschine soll insbesondere eine im Betrieb handgehaltene Werkzeugmaschine verstanden werden. Die Handwerkzeugmaschine kann beispielsweise als ein Netzgerät ausgebildet sein. Es ist ebenfalls denkbar, dass die Handwerkzeugmaschine als eine Akku-Handwerkzeugmaschine ausgebildet ist, wobei die Handwerkzeugmaschine vorzugsweise eine Akkuschnittstelle aufweist, über die sie mit einem Handwerkzeugmaschinenakkupack lösbar verbunden ist. Die Akkuschnittstelle der Staubabsaugvorrichtung ist insbesondere im Wesentlichen identisch zu einer Akkuschnittstelle der Handwerkzeugmaschine ausgebildet. Unter einer lösbaren Verbindung soll im Zusammenhang dieser Anmeldung insbesondere eine werkzeuglos lösbare Verbindung verstanden werden. Der Handwerkzeugmaschinenakkupack ist bevorzugt wechselbar ausgebildet. Die Handwerkzeugmaschine ist insbesondere zur Erzeugung eines Bohrlochs in einem Werkstück ausgebildet. Die Handwerkzeugmaschine kann beispielsweise als eine Bohrmaschine, als ein Bohrschrauber, als ein Drehschlagbohrer, als ein Bohrhammer oder dergleichen ausgebildet sein. Bei dem Werkstück kann es sich beispielsweise um eine Wand aus Holz oder Beton handeln. Bei der Erzeugung des Bohrlochs durch die Handwerkzeugmaschine entsteht Bohrklein bzw. Bohrmehl, das zumindest teilweise aus dem Bohrloch austritt.

Die Gebläseeinheit umfasst zumindest eine Antriebseinheit zum Antrieb zumindest eines Gebläseelements. Die Gebläseeinheit kann zur Erzeugung eines einzelnen Luftvolumenstroms oder mehrerer Luftvolumenströme ausgebildet sein. Die Antriebseinheit ist insbesondere als ein Elektromotor ausgebildet. Das Gebläseelement ist insbesondere als ein Lüfter, vorzugsweise als ein Radialventilator ausgebildet. Alternativ sind auch andere dem Fachmann bekannte Lüfter, wie beispielsweise ein Axialventilator, ein Diagonalventilator oder ein Tangentialventilator denkbar. Das Gebläseelement ist mit der Antriebseinheit insbesondere rotatorisch gekoppelt. Die Gebläseeinheit ist insbesondere vollständig im Gehäuse der Staubabsaugvorrichtung aufgenommen bzw. im Gehäuse der Staubabsaugvorrichtung integriert. Die Staubabsaugvorrichtung weist einen Luftkanal auf, welcher sich im am Werkstück befestigten Zustand von der Absaugöffnung bis zu der Gebläseeinheit erstreckt. Der Luftkanal ist im Wesentlichen geschlossen ausgebildet, wobei innerhalb des Luftkanals während des Betriebs der Staubabsaugvorrichtung ein Unterdruck vorliegt. Im unbefestigten Zustand ist der Luftkanal insbesondere verkürzt ausgebildet, sodass sich der Luftkanal von der Ansaugöffnung zu der Gebläseeinheit erstreckt. Während des Betriebs der Staubabsaugvorrichtung bewegt sich der durch die Gebläseeinheit erzeugt Luftvolumenstrom von der Absaugöffnung bzw. der Ansaugöffnung in Richtung der Gebläseeinheit.

Die Absaugöffnung und die Ansaugöffnung sind als voneinander getrennte Öffnungen des Gehäuses der Staubabsaugvorrichtung ausgebildet. Die Ansaugöffnung und die Absaugöffnung sind insbesondere auf derselben Seite, vorzugsweise auf einer dem Werkstück im befestigten Zustand zugewandten Seite, der Staubabsaugvorrichtung angeordnet.

Insbesondere ist die Staubabsaugvorrichtung im Bereich der Absaugöffnung derart ausgebildet, dass im Betrieb der Staubabsaugvorrichtung Luft zwischen einem ebenen Werkstück und der Staubabsaugvorrichtung angesaugt werden kann. Dies kann beispielsweise dadurch realisiert werden, dass die Absaugöffnung im am Werkstück befestigten Zustand zumindest teilweise, insbesondere vollständig, über einen Spalt von dem Werkstück beabstandet ist. In einer bevorzugten Ausführungsform liegt Absaugöffnung der Staubabsaugvorrichtung im an dem Werkstück befestigten Zustand über zumindest ein Anschlagelement an dem Werkstück an. Im Betrieb wird über die Absaugöffnung aktiv über einen Luftstrom Bohrklein bzw. Staub von der Staubabsaugvorrichtung aufgenommen bzw. aus dem Bohrloch und/oder aus der Umgebung des Bohrlochs angesaugt.

Vorzugsweise ist die Staubabsaugung im Bereich der Ansaugöffnung derart ausgebildet, dass im Betrieb der Staubabsaugvorrichtung der Eintritt von Luft über die Ansaugöffnung minimiert ist. Dies kann beispielweise dadurch realisiert werden, dass die Ansaugöffnung von einem umlaufenden Dichtmittel begrenzt wird, beispielsweise einer flexiblen Dichtlippe, das im Betrieb am Werkstück anliegt. Die Ansaugöffnung weist eine größere Fläche auf als die Absaugöffnung. Im Vergleich zu der Absaugöffnung weist die Ansaugöffnung eine insbesondere zumindest fünffach größere Fläche, vorzugsweise zumindest zehnfache größere Fläche, bevorzugt zumindest zwanzigfache größere Fläche, auf.

Der Haftbereich ist insbesondere als ein von dem Gehäuse der Staubabsaugvorrichtung umschlossener Raum ausgebildet, der zumindest drei Öffnungen aufweist. Eine der Öffnung ist als die Ansaugöffnung ausgebildet. Die anderen beiden Öffnungen sind als Teil des Luftkanals zur Führen des Luftvolumenstroms in den Haftbereich hinein und aus dem Haftbereich heraus vorgesehen.

Des Weiteren wird vorgeschlagen, dass die Absaugöffnung derart mit dem Haftbereich verbunden ist, dass während der Absaugung von Bohrklein aus dem Bohrloch sowohl im Bereich der Absaugöffnung als auch im Haftbereich ein Unterdruck vorliegt, wobei sich der Unterdruck im Bereich der Absaugöffnung von dem Unterdruck im Haftbereich unterscheidet. Vorteilhaft kann dadurch eine ausreichend große Haftkraft der Staubabsaugvorrichtung an dem Werkstück realisiert werden. Insbesondere ist die Staubabsaugvorrichtung derart ausgebildet, dass im Betrieb im Haftbereich stets ein größerer Unterdruck vorliegt als im Bereich der Absaugöffnung.

Weiterhin wird vorgeschlagen, dass die Staubabsaugvorrichtung mit zumindest einer Akkuzelle elektrisch verbindbar ist. Die zumindest eine Akkuzelle kann lösbar oder unlösbar mit dem Gehäuse verbunden sein. Unter einer unlösbar mit dem Gehäuse verbundenen Akkuzelle soll insbesondere eine Akkuzelle verstanden werden, die im mit der Staubabsaugvorrichtung verbundenen Zustand aufladbar, beispielhaft über eine Ladevorrichtung, ist. Die unlösbar verbundene Ackuzelle ist vorzugsweise im Gehäuse der Staubabsaugvorrichtung aufgenommen bzw. in dem Gehäuse der Staubabsaugvorrichtung integriert. Die zumindest eine Akkuzelle ist insbesondere zur Energieversorgung zumindest einer Funktion der Staubabsaugvorrichtung ausgebildet. Beispielhaft kann die Akkuzelle zur Energieversorgung der Gebläseeinheit ausgebildet sein. Alternativ oder zusätzlich kann die zumindest eine Akkuzelle auch zur Energieversorgung einer Elektronik der Staubabsaugvorrichtung, einer Arbeitsstellenbeleuchtung der Staubsaugvorrichtung oder einer Kommunikationsschnittstelle der Staubabsaugvorrichtung vorgesehen sein. Bei der Arbeitsstellenbeleuchtung kann es sich beispielsweise um eine oder mehrere Leuchtdioden handeln, die auf der dem Werkstück zugewandten Seite der Staubsaugvorrichtung angeordnet sind. Unter einer Kommunikationsschnittstelle soll in diesem Zusammenhang insbesondere ein Mittel zum drahtlosen bzw. kontaktlosen Datenaustausch, beispielhaft über Bluetooth, GSM, LTE, UMTS, RFID, etc., verstanden werden. Die Kommunikationsschnittstelle ist insbesondere zum Datenaustausch mit einer externen Vorrichtung, beispielsweise einem Smartphone, einem Rechner oder einem Backend wie einem Server, oder einer Handwerkzeugmaschine ausgebildet. Vorzugsweise sind die Handwerkzeugmaschine und die Staubabsaugvorrichtung derart miteinander verbunden, dass eine Aktivierung der Handwerkzeugmaschine erst nach der Aktivierung der Staubabsaugvorrichtung möglich ist.

Des Weiteren wird vorgeschlagen, dass die Staubabsaugvorrichtung eine Staubsammelkammer mit einem Filterelement aufweist. Die Staubsammelkammer kann zumindest teilweise lösbar mit der Staubabsaugvorrichtung verbunden sein. Die Staubsammelkammer ist insbesondere im Gehäuse der Staubabsaugvorrichtung angeordnet. Die Staubabsaugung kann fest im Gehäuse der Staubabsaugvorrichtung integriert oder lösbar mit dieser verbunden sein. Vorzugsweise ist die Staubsammelkammer abnehmbar ausgebildet. Beispielhaft kann die Staubsammelkammer über einen Schwenkmechanismus oder eine Linearführung mit dem Gehäuse der Staubsaugvorrichtung verbindbar ausgebildet sein.

Das Filterelement ist bevorzugt als ein HEPA Filter ausgebildet. Das Filterelement kann lösbar oder unlösbar mit dem Gehäuse, insbesondere der Staubsammelkammer, der Staubabsaugvorrichtung ausgebildet sein. Insbesondere begrenzt das Filterelement die Staubsammelkammer. Das Filterelement ist vorzugsweise in einem Übergang zwischen der Staubsammelkammer und dem Haftbereich angeordnet, wodurch nur ein im Wesentlichen staubfreier Luftstrom in den Haftbereich gelangt. Vorteilhaft wird durch diese Maßnahme sichergestellt, dass keine Staubabdrücke am Werkstück erzeugt werden. Weiterhin wird vorgeschlagen, dass ein Unterdruck in der Staubsammelkammer geringer ist als im Haftbereich. Insbesondere ist das Filterelement in Strömungsrichtung vor dem Haftbereich angeordnet ist.

Vorzugsweise ist in der Staubsammelkammer ein Filterreinigungsmechanismus integriert, über den das Filterelement zumindest teilweise reinigbar ist. Bei dem Filterreinigungsmechanismus kann es sich beispielsweise um einen mechanischen Mechanismus, der eine Bewegung des Filterelements bewirkt, handeln. Insbesondere wird der mechanische Mechanismus über einen Motor, vorzugsweise über den Elektromotor der Gebläseeinheit angetrieben. Alternativ ist auch ein Filterreinigungsmechanismus denkbar, bei dem der Luftvolumenstrom zumindest teilweise derart in eine entgegengesetzte Richtung geführt wird, dass das Filterelement ausgeblasen wird.

Zudem wird vorgeschlagen, dass die Absaugöffnung einem Staubauge zugeordnet ist, das lösbar mit dem Gehäuse der Staubabsaugvorrichtung verbindbar ist.

Vorteilhaft kann durch ein wechselbares Staubauge die Staubabsaugvorrichtung bzw. die Absaugöffnung auf unterschiedliche Einsatzwerkzeuge, wie beispielsweise Bohrer mit unterschiedlichen Durchmessern oder einer Bohrkrone, angepasst werden. Das Staubauge ist insbesondere als ein Gehäuseteil ausgebildet. Insbesondere ist das Staubauge lösbar mit der Staubsammelkammer verbindbar ausgebildet.

Des Weiteren wird vorgeschlagen, dass das Staubauge relativ zu dem Gehäuse der Staubabsaugvorrichtung zumindest teilweise beweglich ausgebildet ist. Vorteilhaft kann dadurch der Bereich der Absaugung verändert werden, ohne die Staubabsaugvorrichtung von dem Werkstück zu lösen. Das Staubauge kann ein, zwei oder mehrere Gelenke aufweisen, um eine möglichste flexible Positionierung zu ermöglichen. Insbesondere ist das Staubauge derart beweglich ausgebildet, dass die Absaugöffnung unterschiedliche Positionen im am Werkstück gehaltenen Zustand einnehmen kann.

Weiterhin wird vorgeschlagen, dass die Staubabsaugvorrichtung eine Steuereinheit aufweist, die abhängig von einem Ladezustand der zumindest einen Ackuzelle bzw. des Akkupacks die Staubabsaugvorrichtung regelt oder steuert. Insbesondere ist die Steuereinheit dazu ausgebildet, eine Aktivierung der Staubabsaugvorrichtung bzw. der Gebläseeinheit zu verhindern, falls der Ladezustand einen Mindestwert unterschreitet. Bei dem Mindestwert kann es sich beispielsweise um höchsten 40 % der maximalen Kapazität, insbesondere um höchstens 30 % der maximalen Kapazität, vorzugsweise um höchstens 20 % der maximalen Kapazität, der zumindest einen Akkuzelle bzw. des Akkupacks handeln. Des Weiteren ist denkbar, dass die Steuereinheit mit einer optischen oder akustischen Ausgabeeinheit verbunden ist, über die eine Information bezogen auf den Ladezustand, insbesondere einen geringer Ladezustand, anzeigbar ausgegeben werden kann, beispielsweise über ein farbiges Licht, ein blinkendes Licht, ein Warnton, etc.

Zudem ist denkbar, dass die Staubabsaugvorrichtung eine Sensoreinheit aufweist, die dazu ausgebildet ist, eine Kenngröße des Luftstroms zu erfassen. Die Sensoreinheit umfasst zumindest ein Sensorelement, beispielsweise einen Unterdrucksensor. Das Sensorelement kann beispielsweise im Saugkopf, in der Staubsammelkammer oder im Haftbereich angeordnet werden. Vorzugsweise wird die über die Sensoreinheit erfasste Kenngröße des Luftstroms der Steuereinheit bereitgestellt. Vorteilhaft kann dadurch ein Warnsignal ausgegeben werden, sollte die Ansaugkraft im Haftbereich unter einen Schwellenwert fallen.

Des Weiteren ist denkbar, dass die Staubabsaugvorrichtung, insbesondere das Gehäuse der Staubabsaugvorrichtung, ein Sicherungselement aufweist, über das die Staubabsaugung gegen einen Sturz auf den Boden absicherbar ist. Beispielsweise ist denkbar, dass am Gehäuse ein als eine Öse oder als ein Haken ausgebildetes Sicherungselement ausgebildet ist, die bzw. der mit einem Sicherungsseil verbindbar ist.

Zudem wird vorgeschlagen, dass das Gehäuse einen Handgriff aufweist, der sich insbesondere im Wesentlichen parallel zu der Ansaugöffnung erstreckt. Vorteilhaft kann über den Handgriff eine bessere Handhabung der Staubabsaugvorrichtung realisiert werden. Insbesondere ist die Akkuschnittstelle im oder am Handgriff angeordnet. Die Akkuschnittstelle kann beispielhaft unterhalb am Handgriff angeordnet sein. Alternativ ist auch denkbar, dass die Akkuschnittstelle derart im Handgriff angeordnet ist, dass der Akkupack zumindest teilweise, vorzugsweise größtenteils, in dem Handgriff aufgenommen ist.

Weiterhin wird vorgeschlagen, dass die Staubabsaugvorrichtung eine Schutzeinheit zum Schutz der Gebläseeinheit aufweist. Vorteilhaft kann über die Schutzeinheit sichergestellt werden, dass über die Ansaugöffnung kein Bohrklein in die Gebläseeinheit eintreten kann. Vorzugsweise weist die Schutzeinheit zumindest ein Filterelement auf. Das Filterelement kann im Haftbereich oder angrenzend zum Haftbereich angeordnet sein. Das Filterelement kann beispielsweise als ein HEPA-Filter, als ein Metallgitter, als ein Vlies, als ein Schaumstoff oder dergleichen ausgebildet sein. Insbesondere weist das Filterelement der Schutzeinheit eine größere Porengröße auf als das Filterelement der Staubsammelkammer, da der feine Bohrstaub bereits über das Filterelement der Staubsammelkammer gefiltert wird. Die Schutzeinheit kann lösbar oder unlösbar mit der Staubabsaugvorrichtung verbunden sein.

Des Weiteren wird vorgeschlagen, dass das Gehäuse zumindest zwei lösbar verbundene Gehäuseteile aufweist, wobei das erste Gehäuseteil zumindest die Staubsammelkammer und die Gebläseeinheit aufweist und das zweite Gehäuseteil zumindest den Haftbereich umfasst. Die Gehäuseteile sind insbesondere kraft- und/oder formschlüssig verbunden. Weiterhin wird vorgeschlagen, dass die Staubabsaugvorrichtung ohne das zweite Gehäuseteil als Handstaubsauger benutzbar ist. Vorteilhaft kann dadurch eine zusätzliche Einsatzmöglichkeit realisiert werden.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1 Seitenansicht eines Systems aus einer erfindungsgemäßen Staubabsaugvorrichtung und einer Handwerkzeugmaschine;
Fig. 2 Längsschnitt der Staubabsaugvorrichtung gemäß Fig. 1;
Fig. 3a Hinteransicht der Staubabsaugvorrichtung gemäß Fig. 1;
Fig. 3b Vorderansicht der Staubabsaugvorrichtung gemäß Fig. 1;
Fig. 4a eine perspektivische Teilansicht einer Staubsammelkammer der Staubabsaugvorrichtung;
Fig. 4b einen Schnitt durch eine Verriegelungseinheit der Staubsammelkammer;
Fig. 4c eine perspektivische Teilansicht der Staubsammelkammer im entriegelten Zustand;
Fig. 4d eine perspektivische Teilansicht der Staubsammelkammer im geöffneten Zustand;
Fig. 5 eine perspektivische Ansicht einer alternativen Ausführungsform eines Staubauges;
Fig. 6 eine perspektivische Ansicht einer alternativen Ausführungsform der Staubabsaugvorrichtung;
Fig. 7 eine Vorderansicht einer alternativen Ausführungsform der Staubabsaugvorrichtung.

### Beschreibung der Ausführungsbeispiele

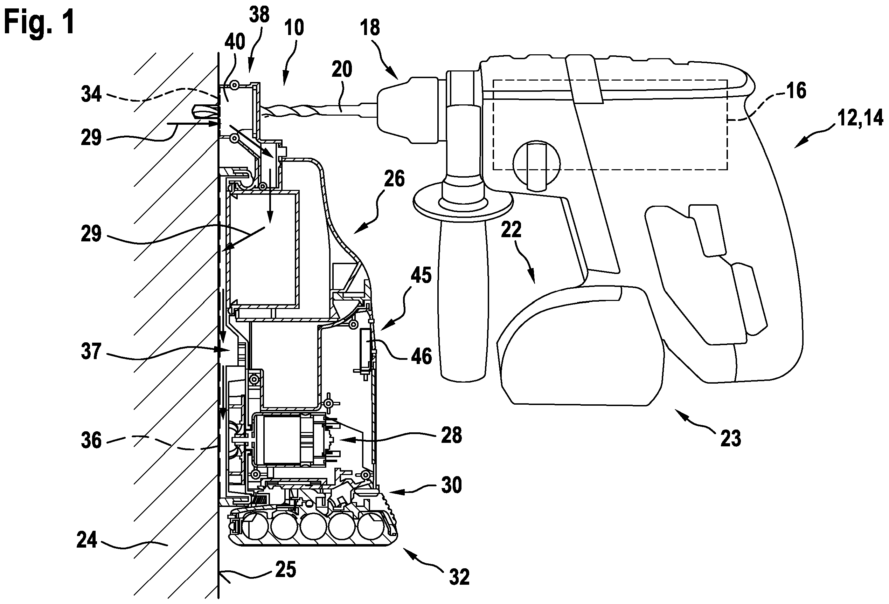

In Fig. 1 ist eine Staubabsaugvorrichtung 10 in einem Längsschnitt und eine Handwerkzeugmaschine 12 in einer Seitenansicht gezeigt. Die Handwerkzeugmaschine 12 ist beispielhaft als ein Bohrhammer 14 ausgebildet. Die Handwerkzeugmaschine 12 weist eine ein Schlagwerk und einen Elektromotor aufweisende Antriebseinheit 16 auf. Das Schlagwerk kann beispielhaft als ein pneumatisches Schlagwerk ausgebildet sein. Die Antriebseinheit 16 ist mit einer Werkzeugaufnahme 18 gekoppelt, in welcher ein als ein Gesteinsbohrer ausgebildetes Einsatzwerkzeug 20 lösbar aufgenommen bzw. befestigt ist. Die Handwerkzeugmaschine 12 weist eine Akkuschnittstelle 22 auf, über die ein als ein Handwerkzeugmaschinenakkupack ausgebildeter Akkupack 23 lösbar verbunden ist.

Die Staubabsaugvorrichtung 10 liegt in einem an einem Werkstück 24 befestigten Zustand vor. Die Staubabsaugvorrichtung 10 weist ein Gehäuse 26 auf, in welchem eine Gebläseeinheit 28 zur Erzeugung eines Luftvolumenstroms 29 angeordnet ist. Die Staubabsaugvorrichtung 10 weist eine Akkuschnittstelle 30 auf, über die ein beispielhaft als Handwerkzeugmaschinenakkupack ausgebildeter Akkupack 32 lösbar mit der Staubabsaugvorrichtung 10 verbunden ist. Über den Akkupack 32 wird die Energieversorgung der Staubabsaugvorrichtung 10 bereitgestellt. Insbesondere ist der Akkupack 32 elektrisch mit der Gebläseeinheit 28 zur Energieversorgung verbunden. Vorzugsweise ist die Akkuschnittstelle 30 der Staubabsaugvorrichtung 10 im Wesentlichen identisch zu der Akkuschnittstelle 22 der Handwerkzeugmaschine 12 ausgebildet, sodass der Akkupack 23 der Handwerkzeugmaschine 12 auch mit der Staubabsaugvorrichtung 10 verbindbar ist.

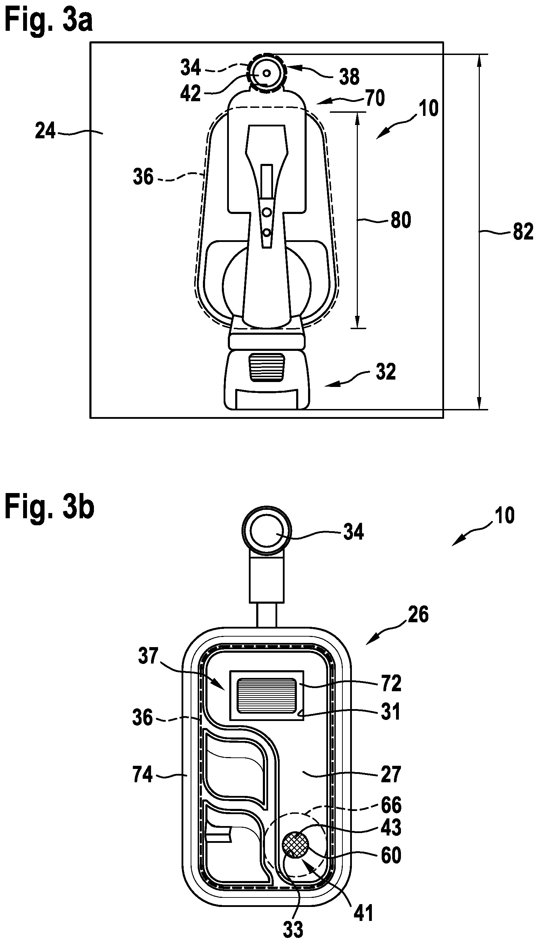

Des Weiteren weist die Staubabsaugvorrichtung eine Absaugöffnung 34 zur Absaugung von Bohrklein aus einem Bohrloch und eine Ansaugöffnung 36 zur Erzeugung eines Unterdrucks in einem Haftbereich 37 zwischen der Staubabsaugvorrichtung 10 und dem Werkstück 24 auf. Die Ansaugöffnung 36 liegt vorteilhaft vollständig am Werkstück 24 an, damit ein möglichst großer Unterdruck zwischen der Staubabsaugvorrichtung 10 und dem Werkstück 24 erzeugbar ist. Die Absaugöffnung 34 ist einem Staubauge 38 zugeordnet. Die Absaugöffnung 34 liegt beispielhaft vollständig am Werkstück 24 an. Es ist allerdings ebenfalls denkbar, dass die Absaugöffnung 34 nur teilweise am Werkstück 24 anliegt oder über einen Spalt beabstandet zum Werkstück 24 angeordnet ist. Das Staubauge 38 weist eine im wesentlichen zylindrische Aufnahme 40 auf, durch die das Einsatzwerkzeug 20 durch das Staubauge 38 hindurchgeführt werden kann. Die Absaugöffnung 34 bildet das vordere Ende der Aufnahme 40 des Staubauges 38. Das hintere Ende der Aufnahme 40 des Staubauges 38 kann vorteilhaft eine flexible Dichtung 42 aufweisen, die eine Austreten von Bohrklein bzw. Staub aus dem hinteren Ende der Aufnahme 40 verhindert (siehe Fig. 3). Die flexible Dichtung 42 kann beispielsweise aus elastischen Borsten, beispielsweise Kunststoffborsten, bestehen.

Des Weiteren weist die Staubabsaugvorrichtung 10 einen Handgriff 44 auf. Der Handgriff 44 erstreckt sich im Wesentlichen parallel zu einer Oberfläche 25 des Werkstücks 24. Der Handgriff 44 ist einstückig mit dem Gehäuse 26 der Staubabsaugvorrichtung 10 ausgebildet. Die Staubabsaugvorrichtung 10 weist am Handgriff 44 einen Betriebsschalter 46 auf, über den die Staubabsaugvorrichtung 10 ein- und ausgeschaltet werden kann. Der Betriebsschalter 46 ist beispielhaft auf einer der Ansaugöffnung 36 abgewandten Seite des Staubabsaugvorrichtung 10 angeordnet. Alternativ sind allerdings auch andere Anordnungen des Betriebsschalters 46 denkbar, wie beispielsweise seitlich am Handgriff 44 oder auf einer der Ansaugöffnung 36 zugewandten Seite des Handgriffs 44.

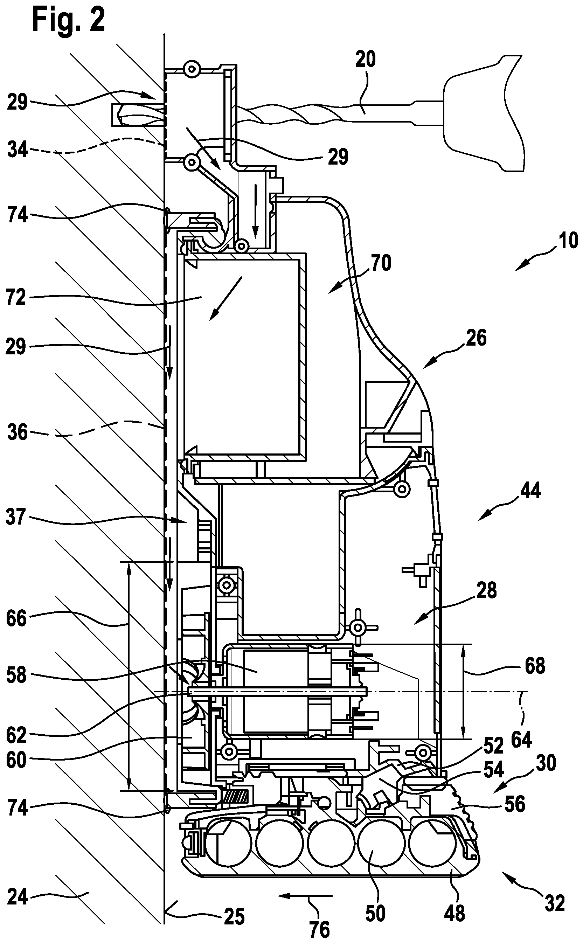

In Fig. 2 ist ein Längsschnitt der Staubabsaugvorrichtung 10 gezeigt. Die Staubabsaugvorrichtung 10 ist im insbesondere ordnungsgemäßen Betrieb gezeigt. Im Betrieb befindet sich die Staubabsaugvorrichtung 10 im eingeschalteten Zustand, wobei die Gebläseeinheit 28 durch den verbundenen Akkupack 32 elektrisch mit Energie versorgt wird. Im Betrieb ist die Staubabsaugvorrichtung 10 vollständig am Werkstück 24 über den Unterdruck im Haftbereich 37 befestigt. Mit anderen Worten wird die Staubabsaugvorrichtung 10 im Betrieb durch sich selbst am Werkstück 24 gehalten.

Der Akkupack 32 weist ein Gehäuse 48 auf, in welchem beispielhaft fünf Ackuzellen 50 in einer Reihe aufgenommen sind. Der Akkupack 32 ist somit als ein einlagiger Akkupack ausgebildet. Es ist ebenfalls denkbar, dass der Akkupack 32 zweilagig oder dreilagig ausgebildet ist. Der Akkupack 32 weist beispielhaft eine Betriebsspannung von 18 V auf. Die Akkuschnittstelle 30 der Staubabsaugvorrichtung 10 weist nicht näher dargestellte Führungselemente auf, die mit korrespondierenden, nicht näher dargestellten Führungselementen des Akkupacks 32 verbindbar sind. Die jeweiligen Führungselemente umfassen beispielhaft Führungsschienen und Führungsnuten. Des Weiteren umfasst die Akkuschnittstelle 30 der Staubabsaugvorrichtung 10 und der Akkupack 32 korrespondierende Verriegelungselemente 52, 54, über die der Akkupack 32 am Gehäuse 26 der Staubabsaugvorrichtung verriegelt werden kann. Das Verriegelungselement 52 der Staubabsaugvorrichtung 10 ist als eine Aussparung ausgebildet, in die im verriegelten Zustand das als drehbar gelagertes Rastelement ausgebildete Verriegelungselement 54 des Akkupacks 32 eingreift. Das Verriegelungselement 54 des Akkupacks 56 ist mechanisch mit einem Betätigungselement 56 gekoppelt, das beispielhaft am Akkupack 32 angeordnet ist. Mittels einer manuellen Betätigung des Betätigungselements 56 kann die Verriegelung gelöst werden.

Die Gebläseeinheit 28 weist einen Elektromotor 58 und ein Lüfterelement 60, das beispielhaft als ein Radialventilator ausgebildet ist, auf. Das Lüfterelement 60 ist drehfest mit einer Motorwelle 62 des Elektromotors 58 verbunden, um eine rotatorische Antriebsbewegung des Elektromotors 58 auf das Lüfterelement 60 zu übertragen. Der Elektromotor 58 ist derart im Gehäuse 26 der Staubabsaugvorrichtung 10 aufgenommen, dass eine Rotationsachse 64 des Elektromotors 58 die Oberfläche 25 des Werkstücks 24 im befestigten Zustand insbesondere im Wesentlichen senkrecht schneidet. Um einen ausreichend großen Luftvolumenstrom zu erzeugen, weist das Lüfterelement 60 einen Durchmesser 66 auf, der größer ist, als ein Durchmesser 68 des Elektromotors 58. Insbesondere entspricht der Durchmesser 66 des Lüfterelements 60 zumindest 150 % des Durchmessers 68 des Elektromotors 58, vorzugweise zumindest 200 % des Durchmessers 68 des Elektromotors 58. Das Lüfterelement 60 ist auf dem dem Werkstück 24 zugewandten Ende des Elektromotors 58 angeordnet.

Durch das rotatorisch angetriebene Lüfterelement 60 wird ein Luftstrom erzeugt. Im Betrieb der Staubabsaugvorrichtung 10 tritt der Luftstrom 29 im Bereich des Staubauges 38 in das Gehäuse 26 der Staubabsaugvorrichtung 10 ein. Mit dem Luftstrom 29 tritt im Bereich der Absaugöffnung 34 das während der Bearbeitung des Werkstücks 24 durch die Handwerkzeugmaschine 12 erzeugte Bohrklein bzw. Staub in das Gehäuse 26 der Staubabsaugvorrichtung 10 ein. Das Bohrklein bzw. der Luftstrom 29 wird im Staubauge 38 zu einer Staubsammelkammer 70 geführt. Die Staubsammelkammer 70 wird durch ein Filterelement 72 begrenzt, sodass sich vorteilhaft das Bohrklein in der Staubsammelkammer 70 ansammelt. Das Filterelement 72 ist beispielhaft als ein HEPA Faltenfilter ausgebildet.

Der Luftstrom 29 tritt über das Filterelement 72 aus der Staubsammelkammer 70 hinaus und in den Haftbereich 37 hinein. Vorteilhaft gelangt damit ein im Wesentlichen staubfreier Luftstrom 29 in den Haftbereich 37. Auf der dem Werkstück 24 zugewandten Seite wird der Haftbereich 37 durch die Ansaugöffnung 36 begrenzt. Die Ansaugöffnung 36 ist als eine Öffnung des Gehäuses 26 der Staubabsaugvorrichtung 10 ausgebildet. Vorzugsweise weist die Staubabsaugvorrichtung 10 im Bereich der Ansaugöffnung 36 ein Dichtmittel 74 auf, wobei die Staubabsaugvorrichtung 10 im Bereich der Ansaugöffnung 36 über das Dichtmittel 74 am Werkstück 24 anliegt. Das Dichtmittel 74 ist insbesondere aus einem flexiblen und/oder elastischen Kunststoffmaterial ausgebildet. Beispielhaft ist das Dichtmittel 74 in diesem Ausführungsbeispiel als umlaufende Dichtlippe ausgebildet. Vorteilhaft kann durch das als Dichtlippe ausgebildete Dichtmittel 74 der Unterdruck im Haftbereich 37 vergrößert werden, sodass die durch den Unterdruck erzeugte Ansaugkraft der Staubabsaugvorrichtung 10 an das Werkstück 24 verstärkt wird. Der Luftstrom 29 bewegt sich im Haftbereich 37 in Richtung des Lüfterelements 60 und tritt im Bereich des Lüfterelements 60 über nicht dargestellte Luftaustrittsöffnungen im Gehäuse 26 der Staubabsaugvorrichtung 10 aus diesem hinaus.

Die Staubabsaugvorrichtung 10 weist an ihrem oberen Ende das Staubauge 38 und an ihrem unteren Ende die Akkuschnittstelle 30 mit dem Akkupack 32 auf. Zwischen dem Staubauge 38 und der Akkuschnittstelle 30 ist die Staubsammelkammer 70 oberhalb der Gebläseeinheit 28 angeordnet. Vorteilhaft kann dadurch eine sehr kompakte Bauweise realisiert werden. Vorzugsweise liegt somit die Staubsammelkammer 70 und die Gebläseeinheit 28 im Wesentlichen in einem Bereich, der von der Ansaugöffnung 36 aufgespannt wird. Unter einem von der Ansaugöffnung 36 aufgespannten Bereich soll insbesondere ein rechteckiger Raum verstanden werden, der umfänglich bzw. in zwei Dimensionen von der Ansaugöffnung 36 aufgespannt wird.

Es ist ebenfalls denkbar, dass in einer alternativen Ausführungsform der Akkupack 32 derart im Gehäuse 26, insbesondere im Handgriff 44, aufgenommen ist, dass in dem von der Ansaugöffnung 36 aufgespannten Bereich sowohl die Staubsammelkammer 70, die Gebläseeinheit 28 als auch der Akkupack 32 im Wesentlichen angeordnet sind. Die Verbindungsrichtung 76, entlang der die Verbindung des Akkupacks 32 mit der Staubabsaugvorrichtung 10 erfolgt, ist beispielhaft parallel zu der Rotationsachse 64 des Elektromotors 58 ausgebildet. Es sind allerdings auch andere Verbindungsrichtungen denkbar, beispielhaft eine Verbindungsrichtung die im Wesentlichen parallel zu einer Längserstreckung des Handgriffs 44 ausgebildet ist.

In Fig. 3a ist eine Hinteransicht der Staubabsaugvorrichtung 10 im am Werkstück 24 befestigten Zustand gezeigt. Mit einer gestrichelten Linie ist sowohl die von der Absaugöffnung 34 als auch die von der Ansaugöffnung 36 aufgespannte Fläche angedeutet. Die von der Absaugöffnung 34 aufgespannte Fläche weist eine Größe auf, die kleiner ist als 5 % der Größe der von der Ansaugöffnung 36 aufgespannten Fläche. Vorteilhaft kann dadurch eine ausreichend hohe Ansaugkraft der Staubabsaugvorrichtung 10 gewährleistet werden, damit die Staubabsaugvorrichtung 10 vollständig am Werkstück 24 gehalten werden kann. Des Weiteren entspricht eine Länge 80 der Ansaugöffnung 36 zumindest 75 % einer Länge 82 der Staubabsaugvorrichtung 10 ohne den Akkupack 32.

In Fig. 3b ist eine Vorderansicht der Staubabsaugvorrichtung 10 gezeigt. Der Haftbereich 37 wird auf der dem Werkstück 24 zugewandten Seite von der Ansaugöffnung 36 und auf der gegenüberliegenden Seite von dem Gehäuse 26, insbesondere einer Wandung 27, begrenzt. Die Wandung 27 erstreckt sich im Wesentlichen parallel zu der Ansaugöffnung 36. Im an einem Werkstück 24 befestigten Zustand ist die Wandung 27 im Wesentlichen parallel zu dem Werkstück 24 angeordnet.

Die Wandung 27 weist zwei Ausnehmungen 31, 33 auf. Die Ausnehmungen 31, 33 sind insbesondere als Luftdurchlässe ausgebildet, durch die der Luftstrom 29 während des Betriebs geführt wird. Die erste Ausnehmung 31 ist zur strömungstechnischen Verbindung der Staubsammelkammer 70 mit dem Haftbereich 37 ausgebildet. Die erste Ausnehmung 31 ist beispielhaft rechteckig geformt. Die erste Ausnehmung 31 ist benachbart zu der Staubsammelkammer 70 angeordnet. Insbesondere weist die Wandung 27 eine dem Haftbereich 37 zugwandte Seite und eine der Staubsammelkammer 70 zugewandte Seite auf, wobei das Filterelement 72 der Staubsammelkammer 70 auf der der Staubsammelkammer 70 zugewandten Seite angeordnet ist, vorzugsweise anliegt. Insbesondere liegt das Filterelement 72 derart an der Wandung 27 an, dass der Luftstrom 29 nur über das Filterelement 72 die erste Ausnehmung 31 passieren kann.

Die zweite Ausnehmung 33 ist benachbart zu der Gebläseeinheit 28 angeordnet. Die zweite Ausnehmung 33 ist zur strömungstechnischen Verbindung des Haftbereichs 37 mit der Gebläseeinheit 28 ausgebildet. Die zweite Ausnehmung 33 weist einen kreisförmigen Querschnitt auf. Im Bereich der zweiten Ausnehmung 33 weist die Staubabsaugvorrichtung 10 eine Schutzeinheit 41 auf. Die Schutzeinheit 41 ist insbesondere zum Schutz der Gebläseeinheit 28 ausgebildet. Die Schutzeinheit 41 weist ein Filterelement 43 auf. Das Filterelement 43 ist beispielhaft als ein Metallgitter ausgebildet. Das Filterelement 43 ist insbesondere derart im Bereich der zweiten Ausnehmung 33 angeordnet, dass ein Luftstrom beim Passieren der zweiten Ausnehmung diesen ebenfalls passieren muss. Das Filterelement 43 ist insbesondere in der zweiten Ausnehmung 33 angeordnet. Das Filterelement 43 der Schutzeinheit 41 weist eine größere Porengröße auf als das Filterelement 72 der Staubsammelkammer 70. Die Querschnittsfläche der zweiten Ausnehmung 33 ist kleiner ausgebildet als die Querschnittsfläche der ersten Ausnehmung 31. Insbesondere beträgt die Querschnittsfläche der zweiten Ausnehmung 33 weniger als 20 % der Querschnittsfläche der ersten Ausnehmung 31.

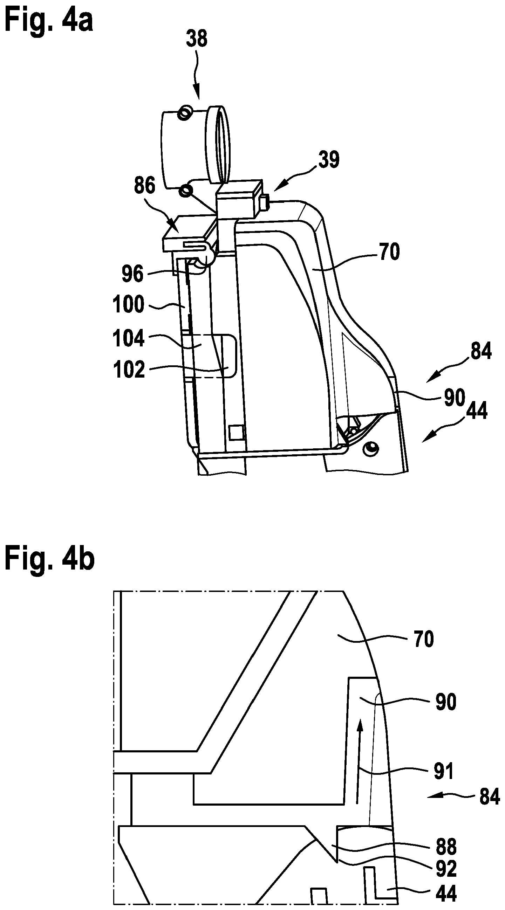

In Fig. 4a ist in einer perspektivischen Teilansicht die Staubsammelkammer 70 im mit dem Gehäuse 26 der Staubabsaugvorrichtung 10 verbundenen Zustand gezeigt. Das Staubauge 38 weist eine mechanische Schnittstelle 39 auf, über die das Staubauge 38 lösbar mittels einer Rastverbindung mit der Staubsammelkammer 70 verbunden ist.

Die Staubsammelkammer 70 wiederum ist lösbar mit dem Gehäuse 26 der Staubabsaugvorrichtung 10 verbunden. Die Staubsammelkammer 70 ist insbesondere über eine Verriegelungseinheit 84 und eine Schwenkeinheit 86 mit dem Gehäuse 26 der Staubabsaugvorrichtung 10 verbunden. Die Verriegelungseinheit 84 umfasst ein beweglich gelagertes Verriegelungselement 88 und ein Betätigungselement 90, die beispielhaft an der Staubsammelkammer 70 angeordnet sind. Am Gehäuse 26, insbesondere am Handgriff 44, der Staubabsaugvorrichtung 10 ist ein korrespondierendes Verriegelungselement 92 angeordnet. Die beiden Verriegelungselement 88, 92 sind zur lösbaren kraft- und/oder formschlüssigen Verbindung zwischen der Staubsammelkammer 70 und dem Handgriff 44 ausgebildet. Das Betätigungselement 90 und das Verriegelungselement 88 sind derart miteinander gekoppelt, dass über eine manuelle Betätigung des Betätigungselements 90 die beiden Verriegelungselements 88, 92 außer Eingriff bringbar sind. Das Verriegelungselement 88 der Staubsammelkammer 70 ist beispielhaft als Nase bzw. als Haken ausgebildet und das Verriegelungselement 92 des Handgriffs 44 ist beispielhaft als eine Ausnehmung ausgebildet. Das Betätigungselement 90 kann mittels eines nicht dargestellten Federelements, beispielsweise einer Ringfeder (nicht dargestellt), mit einer Kraft in Richtung der Verriegelungsposition vorgespannt sein. In Fig. 4b ist ein Schnitt durch die Verriegelungseinheit 84 gezeigt, wobei über eine manuelle Betätigung des Betätigungselements 90 entlang der Betätigungsrichtung 91 die Verriegelung lösbar ist.

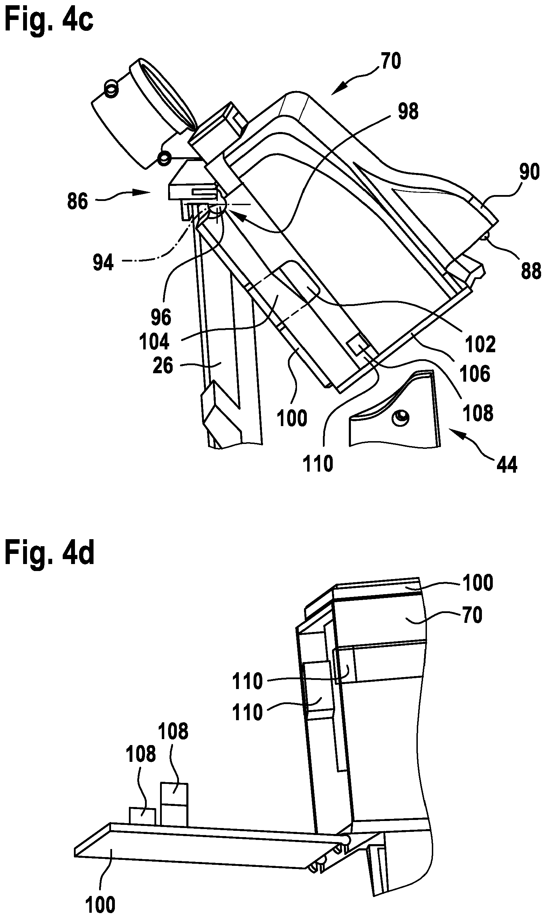

Nachdem die Verriegelung der Verriegelungseinheit 84 gelöst wurde, kann die Staubsammelkammer 70 mittels einer Schwenkbewegung um eine Schwenkachse 94 der Schwenkeinheit 86 von dem Gehäuse 26 der Staubabsaugvorrichtung 10 gelöst werden (siehe Fig. 4c). Die Schwenkeinheit 86 besteht beispielhaft aus einem zylinderförmigen Formschlusselement 96 des Gehäuses 26, an dem im verbundenen Zustand ein korrespondierendes, als halbkreisförmige Nut ausgebildetes, Formschlusselement 98 an der Außenfläche der Staubsammelkammer 70 angeordnet ist.

Das Filterelement 72 kann unlösbar mit der Staubsammelkammer 70 verbunden sein oder alternativ, wie beispielhaft gezeigt, lösbar mit der Staubsammelkammer 70 verbunden sein. Das Filterelement 72 weist einen Kunststoffrahmen 100 auf, der beispielhaft aus einem Hartplastik besteht. Am Kunststoffrahmen 100 sind zwei gegenüberliegende Rastarme 102 einstückig angeformt, die lösbar mit Aufnahmetaschen 104 der Staubsammelkammer 70 verbindbar sind. Vorteilhaft kann die Staubsammelkammer 70 nach dem Entfernen des Filterelements 72 geleert und das Filterelement 72 gereinigt werden.

Um eine Entleeren der Staubsammelkammer 70 auch bei eingesetztem Filterelement 72 zu ermöglichen, weist die Staubsammelkammer 70 zudem eine Entleerungsklappe 106 auf. Die Entleerungsklappe 106 ist auf der dem Staubauge 38 abgewandten Seite der Staubsammelkammer 70 angeordnet. Die Entleerungsklappe 106 ist beispielhaft schwenkbar im Gehäuse der Staubsammelkammer 70 gelagert. Die Entleerungsklappe 106 weist zwei Rastarme 108 auf, die im geschlossenen Zustand in korrespondierende Aufnahmetaschen 110 der Staubsammelkammer 70 eingreifen. In Fig. 4d ist die Entleerungsklappe 106 im geöffneten Zustand gezeigt, wobei die Entleerungsklappe 106 im geöffneten Zustand weiterhin mit der Staubsammelkammer 70 teilweise, insbesondere drehbar, verbunden ist.

Alternativ oder zusätzlich zur Entleerungsklappe 106 wäre ebenfalls denkbar, dass das Gehäuse der Staubabsaugvorrichtung 10, insbesondere die Staubsammelkammer 70, eine Koppelstelle für einen externen Staubsauger (nicht dargestellt) aufweist. Die Koppelstelle kann beispielsweise auf der dem Filterelement 72 gegenüberliegenden Seite der Staubsammelkammer 70 angeordnet sein, es sind jedoch auch andere Anordnungen denkbar. Die Koppelstelle kann vorzugsweise zur Kopplung mit einem Saugschlauch des externen Staubsaugers ausgebildet sein. Die Koppelstelle ist bevorzugt verschließbar ausgebildet, sodass im geschlossenen Zustand kein Staub aus der Staubsammelkammer 70 austreten kann. Vorteilhaft kann durch die Koppelstelle die Staubsammelkammer 70 entleert werden, ohne dass der Inhalt der Staubsammelkammer 70 in die Umgebung austritt. Des Weiteren kann, falls erforderlich, bei Bedarf der Unterdruck in der Staubsammelkammer 70 sowohl durch die interne Gebläseeinheit 28 im Gehäuse 26 der Staubabsaugvorrichtung 10 als auch durch eine externe Gebläseeinheit des externen Staubsaugers (nicht dargestellt) erzeugt werden.

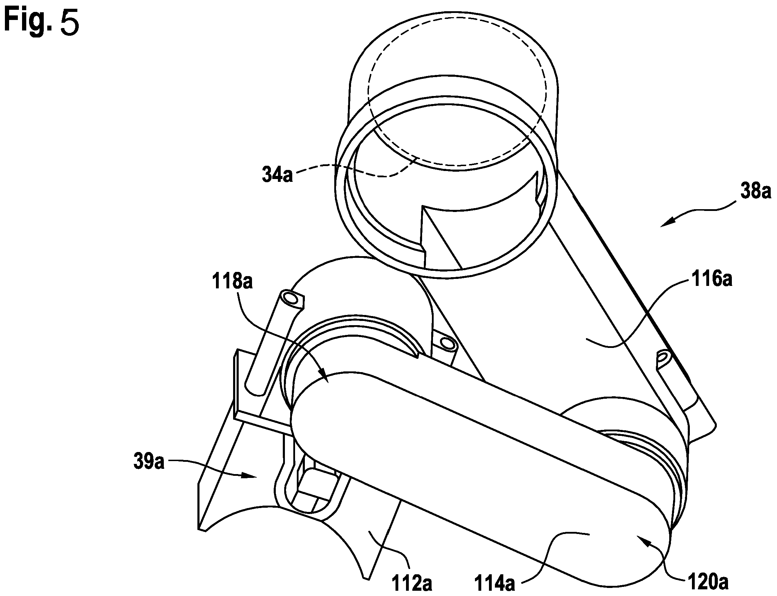

In Fig. 5 ist eine alternative Ausführungsform des Staubauges 38 gezeigt. Das Staubauge 38a weist eine mechanische Schnittstelle 39a auf, die im Wesentlichen der mechanischen Schnittstelle 39 des zuvor beschriebenen Staubauges 38 entspricht. Somit ist das Staubauge 38a wechselbar mit dem vorigen Staubauge 38 ausgebildet. Das Staubauge 38a weist ebenfalls eine Ansaugöffnung 36a auf, die im mit der Staubabsaugvorrichtung 10 verbundenen Zustand dem Werkstück 24 zugewandt ist. Zusätzlich und optional kann das Staubauge 38a ebenfalls eine flexible Dichtung aufweisen. Das Staubauge 38a weist drei Teilbereiche 112a, 114a, 116a auf, die relativ zueinander beweglich ausgebildet sind. Der erste Teilbereich 112a umfasst die mechanische Schnittstelle 39a. Der dritte Teilbereich 116a umfasst die Absaugöffnung 34a. Der erste Teilbereich 112a ist mit dem zweiten Teilbereich 114a über ein erstes Drehgelenk 118a drehbar verbunden. Des Weiteren ist der zweite Teilbereich 114a mit dem dritten Teilbereich 116a über ein zweites Drehgelenk 120a verbunden. Vorteilhaft kann über die zwei Drehgelenke 118a, 120a die Position der Absaugöffnung 34a des Staubauges 38a relativ zu der mechanischen Schnittstelle 39a in zwei Raumrichtungen insbesondere manuell verändert werden. Die Absaugöffnung 34a kann somit in ihrer Höhe und/oder in ihrer seitlichen Positionierung bezüglich der mechanischen Schnittstelle 39a verändert werden, wobei der Abstand von dem Werkstück 24 konstant ist.

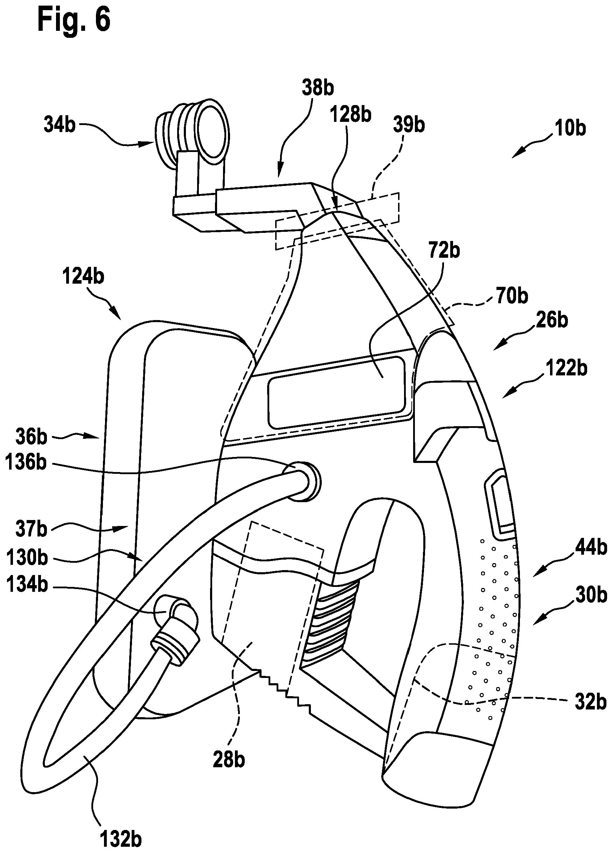

In Fig. 6 ist eine alternative Ausführungsform der Staubabsaugvorrichtung 10b in einer perspektivischen Ansicht gezeigt. Die Staubabsaugvorrichtung 10b weist ein Gehäuse 26b auf. Das Gehäuse 26b der Staubabsaugvorrichtung 10b weist ein erstes Gehäuseteil 122b und ein zweites Gehäuseteil 124b auf. Die beiden Gehäuseteile 122b, 124b sind über eine nicht näher dargestellte mechanische Schnittstelle 126b lösbar kraft- und/oder formschlüssig miteinander verbunden. Das erste Gehäuseteil 122b umfasst eine Staubsammelkammer 70b und eine Gebläseeinheit 28b zur Erzeugung eines Luftstroms. Des Weiteren umfasst das erste Gehäuseteil 122b eine Akkuschnittstelle 30b, über die ein Akkupack 32b lösbar mit der Staubabsaugvorrichtung 10b, insbesondere mit dem ersten Gehäuseteil 122b, verbindbar ist. Der Akkupack 32b ist als ein Handwerkzeugmaschinenakkupack ausgebildet. Das erste Gehäuseteil 122b weist einen Handgriff 44b auf, in welchem der Akkupack 32b größtenteils aufgenommen ist. Unter größtenteils soll im Zusammenhang dieser Anmeldung insbesondere zumindest 50 % verstanden werden. Vorzugsweise ragt lediglich eine Kappe des Akkupacks 32b im verbundenen Zustand aus dem ersten Gehäuseteil 122b hinaus. Die Staubsammelkammer 70b weist einen Eingang 128b auf, über den der Luftstrom in die Staubsammelkammer 70b eintritt. In der Staubsammelkammer 70 ist ein Filterelement 72b angeordnet, das wie bereits zuvor beschrieben als ein HEPA Filter ausgebildet ist. Der Eingang 128b der Staubsammelkammer 70b ist als eine mechanische Schnittstelle 39b ausgebildet, über die ein Absaugaufsatz, wie beispielsweise ein Schlauch oder ein Rohr (nicht dargestellt), oder ein Staubauge 38b mit einer Absaugöffnung 34b lösbar mit der Staubabsaugvorrichtung 10b verbindbar ist. Die mechanische Schnittstelle 39b ist in dieser Ausführungsform beispielhaft zur kraftschlüssigen Verbindung ausgebildet. Beispielhaft ist der Eingang 128b der Staubsammelkammer 70b zumindest teilweise konisch ausgebildet.

Das zweite Gehäuseteil 124b weist einen Haftbereich 37b auf. Der Haftbereich 37b wird dabei von dem zweiten Gehäuseteil 124b selbst und der Ansaugöffnung 36b aufgespannt. Wie bereits in der zuvor beschriebenen Ausführungsform ist im Bereich der Ansaugöffnung 36b ein umlaufendes Dichtmittel 74b angeordnet, um den Unterdruck im Haftbereich 37b zu optimieren. Im mit dem ersten Gehäuseteil 122b verbundenen Zustand ist die Staubabsaugvorrichtung 10b neben der mechanischen Schnittstelle 126b auch über eine Luftaustauschschnittstelle 130 miteinander verbunden. Die Luftaustauschschnittstelle 130b ist beispielhaft als ein Schlauch 132b ausgebildet, der mit jeweils einer Öffnung 134b, 136b im ersten Gehäuseteil 122b und im zweiten Gehäuseteil 124b verbunden ist. Die Luftaustauschschnittstelle 130b ist dazu ausgebildet, das erste Gehäuseteil 122b und das zweite Gehäuseteil 124b derart strömungstechnisch zu verbinden, dass mittels der Gebläseeinheit 28, die im ersten Gehäuseteil 122b angeordnet ist, ein Unterdruck im Haftbereich 37b innerhalb des zweiten Gehäuseteils 122b erzeugbar ist. Es sind unterschiedliche Ausbildungen der Luftaustauschschnittstelle 130b denkbar.

Liegt das erste Gehäuseteil 122b im von dem zweiten Gehäuseteil 124b getrennten Zustand vor, so kann das erste Gehäuseteil 122b allein als eine handgehaltene Staubsaugvorrichtung verwendet werden. Liegt das erste Gehäuseteil 122b im mit dem zweiten Gehäuseteil 124b verbundenen Zustand vor, so kann das erste Gehäuseteil 122b bzw. die Staubabsaugvorrichtung 10b als selbstgehaltene Staubabsaugvorrichtung 10b verwendet werden.

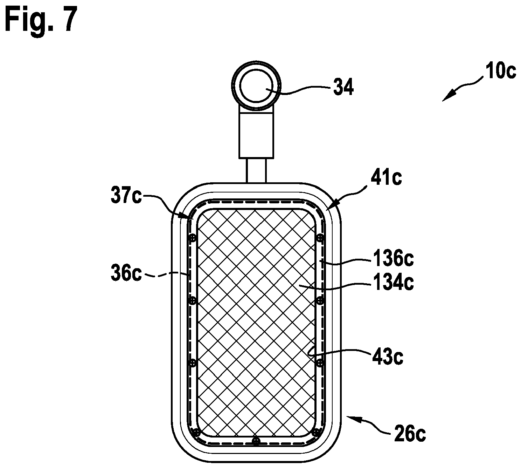

In Fig. 7 ist eine Staubabsaugvorrichtung 10c mit einer alternativen Ausführungsform der Schutzeinheit 41 in einer Vorderansicht gezeigt. Die Staubabsaugvorrichtung 10c entspricht im Wesentlichen der zuvor beschriebenen Staubabsaugvorrichtung 10 und unterscheidet sich lediglich in der Ausgestaltung der Schutzeinheit 41c. Die Schutzeinheit 41c weist ein Filterelement 43c auf, das kraftund/oder formschlüssig mit dem Gehäuse 26c der Staubabsaugvorrichtung 10c ausgebildet ist. Insbesondere ist das Filterelement 43c über eine Schraubverbindung mit dem Gehäuse 26c der Staubabsaugvorrichtung 10c verbunden. Das Filterelement 43c ist insbesondere derart ausgebildet, dass es die Ansaugöffnung 36c im Wesentlichen vollständig abdeckt. Das Filterelement 43c weist einen Filterbereich 134c auf, der aus Kunststoff, insbesondere einem Schaumstoff, ausgebildet ist. Des Weiteren weist das Filterelement 43c einen Rahmen 136c auf, der den Filterbereich 134c umschließt. Der Rahmen 136c ist insbesondere mit dem Filterbereich 134c verbunden. Beispielhaft ist das Filterelement 43c über den Rahmen 136c mit dem Gehäuse 26c der Staubabsaugvorrichtung 10c verbunden.

## Patentansprüche

1. Staubabsaugvorrichtung für eine Handwerkzeugmaschine (12), aufweisend ein Gehäuse (26), eine im Gehäuse (26) aufgenommene Gebläseeinheit (28) zur Erzeugung eines Luftvolumenstroms, zumindest eine Absaugöffnung (34) zur Absaugung von Bohrklein aus einem Bohrloch eines Werkstücks (24), und zumindest eine Ansaugöffnung (36) zur Erzeugung eines Unterdrucks in einem Haftbereich (37) zwischen der Staubabsaugvorrichtung (10) und dem Werkstück (24) anhand des Luftvolumenstroms, wobei der Haftbereich (37) als ein von dem Gehäuse (26) der Stausaugvorrichtung umschlossener Raum ausgebildet ist, **gekennzeichnet durch** eine Akkuschnittstelle (30) die zur Verbindung der Staubabsaugvorrichtung (10) mit einem Akkupack (32), insbesondere mit einem Handwerkzeugmaschinenakkupack, ausgebildet ist.

2. Staubabsaugvorrichtung nach einem der vorhergehenden Ansprüche, **dadurch gekennzeichnet, dass** die Absaugöffnung (34) derart mit dem Haftbereich (37) verbunden ist, dass während der Absaugung von Bohrklein aus dem Bohrloch sowohl im Bereich der Absaugöffnung (34) als auch im Haftbereich (37) ein Unterdruck vorliegt, wobei sich der Unterdruck im Bereich der Absaugöffnung (34) von dem Unterdruck im Haftbereich (37) unterscheidet.

3. Staubabsaugvorrichtung nach einem der vorhergehenden Ansprüche, **dadurch gekennzeichnet, dass** die Staubabsaugvorrichtung (10) eine Staubsammelkammer (70) mit einem Filterelement (72) aufweist.

4. Staubabsaugvorrichtung nach Anspruch 3, **dadurch gekennzeichnet, dass** ein Unterdruck in der Staubsammelkammer (70) geringer ist als im Haftbereich (37).

5. Staubabsaugvorrichtung nach einem der Ansprüche 3 oder 4, **dadurch gekennzeichnet, dass** das Filterelement (72) in Strömungsrichtung des Luftvolumenstroms vor dem Haftbereich (37) angeordnet ist.

6. Staubabsaugvorrichtung nach einem der Ansprüche 3 bis 5, **dadurch gekennzeichnet, dass** die Staubsammelkammer (70) zumindest teilweise lösbar mit der Staubabsaugvorrichtung (10) verbunden ist.

7. Staubabsaugvorrichtung nach einem der vorhergehenden Ansprüche, **dadurch gekennzeichnet, dass** die Absaugöffnung (34) einem Staubauge (38) zugeordnet ist, das lösbar mit dem Gehäuse (26) der Staubabsaugvorrichtung (10) verbindbar ist.

8. Staubabsaugvorrichtung nach Anspruch 7, **dadurch gekennzeichnet, dass** das Staubauge (38a) relativ zu dem Gehäuse (26a) der Staubabsaugvorrichtung (10) zumindest teilweise beweglich ausgebildet ist.

9. Staubabsaugvorrichtung nach einem der vorhergehenden Ansprüche, **dadurch gekennzeichnet, dass** die Staubabsaugvorrichtung eine Steuereinheit aufweist, die abhängig von einem Ladezustand die Staubabsaugvorrichtung (10) regelt oder steuert.

10. Staubabsaugvorrichtung nach einem der vorhergehenden Ansprüche, **dadurch gekennzeichnet, dass** das Gehäuse (26) einen Handgriff (44) aufweist, der sich insbesondere im Wesentlichen parallel zu der Ansaugöffnung (36) erstreckt, wobei insbesondere die Akkuschnittstelle (30) am Handgriff (44) angeordnet ist.

11. Staubabsaugvorrichtung nach einem der vorhergehenden Ansprüche, **dadurch gekennzeichnet, dass** die Staubabsaugvorrichtung (10) eine Schutzeinheit (41) zum Schutz der Gebläseeinheit (28) aufweist.

12. Staubabsaugvorrichtung nach einem der vorhergehenden Ansprüche, **dadurch gekennzeichnet, dass** das Gehäuse (26b) zumindest zwei lösbar verbundenen Gehäuseteile (122b, 124b) aufweist, wobei das erste Gehäuseteil (122b) zumindest die Staubsammelkammer (70b) und die Gebläseeinheit (28b) aufweist und das zweite Gehäuseteil (124b) zumindest den Haftbereich (37b) umfasst.

13. Staubabsaugvorrichtung nach Anspruch 12, **dadurch gekennzeichnet, dass** die Staubabsaugvorrichtung (10) ohne das zweite Gehäuseteil (124b) als Handstaubsauger benutzbar ist.

## Claims

1. Dust-extraction device for a hand-held power tool (12), having a housing (26), having a blower unit (28) which is accommodated in the housing (26) and serves for generating an air volume flow, having at least one suction-extraction opening (34) for extraction by suction of drilling cuttings from a drilled hole of a workpiece (24), and having at least one intake opening (36) for generating a negative pressure in an adhesion region (37) between the dust-extraction device (10) and the workpiece (24) with the aid of the air volume flow, wherein the adhesion region (37) is in the form of space enclosed by the housing (26) of the dust-extraction device, **characterized by** a battery interface (30) which is configured for connection of the dust-extraction device (10) to a battery pack (32), in particular to a hand-held-power-tool battery pack.

2. Dust-extraction device according to one of the preceding claims, **characterized in that** the suction-extraction opening (34) is connected to the adhesion region (37) in such a way that, during the extraction by suction of drilling cuttings from the drilled hole, a negative pressure prevails both in the region of the suction-extraction opening (34) and in the adhesion region (37), wherein the negative pressure in the region of the suction-extraction opening (34) is different from the negative pressure in the adhesion region (37).

3. Dust-extraction device according to either of the preceding claims, **characterized in that** the dust-extraction device (10) has a dust-collecting chamber (70) with a filter element (72).

4. Dust-extraction device according to Claim 3, **characterized in that** a negative pressure in the dust-collecting chamber (70) is lower than in the adhesion region (37).

5. Dust-extraction device according to either of Claims 3 and 4, **characterized in that** the filter element (72) is arranged before the adhesion region (37) in the flow direction of the air volume flow.

6. Dust-extraction device according to one of Claims 3 to 5, **characterized in that** the dust-collecting chamber (70) is connected in an at least partially releasable manner to the dust-extraction device (10) .

7. Dust-extraction device according to one of the preceding claims, **characterized in that** the suction-extraction opening (34) is assigned to a dust eye (38) which is connectable in a releasable manner to the housing (26) of the dust-extraction device (10).

8. Dust-extraction device according to Claim 7, **characterized in that** the dust eye (38a) is configured to be at least partially moveable relative to the housing (26a) of the dust-extraction device (10).

9. Dust-extraction device according to one of the preceding claims, **characterized in that** the dust-extraction device has a control unit which regulates or controls the dust-extraction device (10) according to a state of charge.

10. Dust-extraction device according to one of the preceding claims, **characterized in that** the housing (26) has a handle (44) which extends in particular substantially parallel to the intake opening (36), wherein in particular the battery interface (30) is arranged on the handle (44).

11. Dust-extraction device according to one of the preceding claims, **characterized in that** the dust-extraction device (10) has a protective unit (41) for protecting the blower unit (28).

12. Dust-extraction device according to one of the preceding claims, **characterized in that** the housing (26b) has at least two releasably connected housing parts (122b, 124b), wherein the first housing part (122b) has at least the dust-collecting chamber (70b) and the blower unit (28b) and the second housing part (124b) comprises at least the adhesion region (37b).

13. Dust-extraction device according to Claim 12, **characterized in that** the dust-extraction device (10) is usable without the second housing part (124b) as a hand-held vacuum cleaner.

## Revendications

1. Dispositif d'aspiration de poussière pour une machine-outil à main (12), présentant un boîtier (26), une unité de soufflage (28) reçue dans le boîtier (26) et destinée à produire un flux volumique d'air, au moins une ouverture d'extraction (34) destiné à extraire des débris de perçage hors d'un trou percé d'une pièce (24), et au moins une ouverture d'aspiration (36) destinée à produire une dépression dans une région d'adhérence (37) entre le dispositif d'aspiration de poussière (10) et la pièce (24) à l'aide du flux volumique d'air, la région d'adhérence (37) étant réalisée sous la forme d'un espace entouré par le boîtier (26) du dispositif d'aspiration de poussière, **caractérisé par** une interface d'accumulateur (30) qui est réalisée pour la connexion du dispositif d'aspiration de poussière (10) à un bloc d'accumulateurs (32), en particulier à un bloc d'accumulateurs de machine-outil à main.

2. Dispositif d'aspiration de poussière selon l'une des revendications précédentes, **caractérisé en ce que** l'ouverture d'extraction (34) est connectée à la région d'adhérence (37) de telle sorte que, pendant l'extraction de débris de perçage hors du trou percé, une dépression est présente à la fois dans la région de l'ouverture d'extraction (34) et dans la région d'adhérence (37), la dépression dans la région de l'ouverture d'extraction (34) étant différente de la dépression dans la région d'adhérence (37).

3. Dispositif d'aspiration de poussière selon l'une des revendications précédentes, **caractérisé en ce que** le dispositif d'aspiration de poussière (10) présente une chambre de collecte de poussière (70) dotée d'un élément filtrant (72).

4. Dispositif d'aspiration de poussière selon la revendication 3, **caractérisé en ce qu'**une dépression dans la chambre de collecte de poussière (70) est inférieure à celle dans la région d'adhérence (37).

5. Dispositif d'aspiration de poussière selon l'une des revendications 3 ou 4, **caractérisé en ce que** l'élément filtrant (72) est disposé devant la région d'adhérence (37) dans le sens d'écoulement du flux volumique d'air.

6. Dispositif d'aspiration de poussière selon l'une des revendications 3 à 5, **caractérisé en ce que** la chambre de collecte de poussière (70) est connectée au moins partiellement de manière détachable au dispositif d'aspiration de poussière (10).

7. Dispositif d'aspiration de poussière selon l'une des revendications précédentes, **caractérisé en ce que** l'ouverture d'extraction (34) est associée à un embout d'aspiration (38) qui peut être connecté de manière détachable au boîtier (26) du dispositif d'aspiration de poussière (10).

8. Dispositif d'aspiration de poussière selon la revendication 7, **caractérisé en ce que** l'embout d'aspiration (38a) est réalisé de manière au moins partiellement mobile par rapport au boîtier (26a) du dispositif d'aspiration de poussière (10).

9. Dispositif d'aspiration de poussière selon l'une des revendications précédentes, **caractérisé en ce que** le dispositif d'aspiration de poussière présente une unité de commande qui règle ou commande le dispositif d'aspiration de poussière (10) en fonction d'un état de charge.

10. Dispositif d'aspiration de poussière selon l'une des revendications précédentes, **caractérisé en ce que** le boîtier (26) présente une poignée (44) qui s'étend en particulier sensiblement parallèlement à l'ouverture d'aspiration (36), l'interface d'accumulateur (30) étant disposée en particulier sur la poignée (44).

11. Dispositif d'aspiration de poussière selon l'une des revendications précédentes, **caractérisé en ce que** le dispositif d'aspiration de poussière (10) présente une unité de protection (41) destinée à protéger l'unité de soufflage (28).

12. Dispositif d'aspiration de poussière selon l'une des revendications précédentes, **caractérisé en ce que** le boîtier (26b) présente au moins deux parties de boîtier (122b, 124b) connectées de manière détachable, la première partie de boîtier (122b) présentant au moins la chambre de collecte de poussière (70b) et l'unité de soufflage (28b) et la deuxième partie de boîtier (124b) comprenant au moins la région d'adhérence (37b).

13. Dispositif d'aspiration de poussière selon la revendication 12, **caractérisé en ce que** le dispositif d'aspiration de poussière (10) peut être utilisé, sans la deuxième partie de boîtier (124b), comme aspirateur de poussière à main.
